# EUROPEAN PATENT APPLICATION

(11) **EP 4 220 059 A1**
(43) Date of publication of application: **02.08.2023**
(21) Application number: 22154421.6
(22) Date of filing: 01.02.2022
(51) Int. Cl.: F28D 20/00

(54) **METHOD AND SYSTEM FOR IMPROVING QUALITY PARAMETERS OF BULK MATERIAL FOR THERMAL ENERGY STORAGE**

(71) Applicant: Siemens Gamesa Renewable Energy GmbH & Co. KG, 20097 Hamburg (DE)
(72) Inventor: Eggers, Jan Rudolf, 21640 Bliedersdorf (DE); Thaele, Sören Hendrik, 22111 Hamburg (DE); Wagner, Jennifer Verena, 2611 SX Delft (NL)
(74) Representative: SGRE-Association

(57) **Abstract**

The following invention claims a method for improving at least one quality parameter of a bulk material (10) for thermal energy storage in a thermal energy storage device (110), wherein the method comprises delivering (S0) the bulk material (10) at a processing location (120) of the thermal energy storage device (110), and subsequently conducting at least a processing step (S1) for improving the quality parameter, wherein the processing step (S2) is carried out at the processing location (120) of the thermal energy storage device (110) .

## Description

### Field of invention

The present invention relates to a method for improving at least one quality parameter of a bulk material for thermal energy storage in a thermal energy storage device.

### Art Background

Bulk material for thermal energy storage is used in thermal energy storage devices, where electrical energy, harvested in particular by using renewable energy sources such as wind energy, is converted in thermal energy (heat) and stored. The storage is performed by using a bulk material, in which the thermal energy is stored. The bulk material in the known art is mainly formed out of stones and/or sand having high heat capacity.

At a later point, the thermal energy stored in the thermal energy storage device is used for providing a heat source for household or industrial heating systems or is reconverted into electrical energy and introduced into the electrical network for providing electrical power.

A central aspect for an efficient functioning of the thermal energy storage device is the composition, the treatment and, more in general, the quality of the bulk material used for storing the thermal energy.

The parameters of the bulk material used for heat storage have therefore a key function in determining inter alia the efficiency, the cost and the lifetime of the thermal energy storage device. Amongst these parameters the most important ones are the purity and the composition of the bulk material, the particle size and the size distribution, the stored humidity, the surface roughness, the hardness, the thermal conductivity, the heat capacity and the density.

The bulk material is treated at the source of the bulk material itself before it is delivered to a location of the thermal energy storage device. The bulk material may however undergo some changes during the transportation from its source to the location of the thermal energy storage device, as the bulk material may break or may come in contact with humidity sources or impurities. Such modifications of the bulk material affect an efficient operation of the thermal energy storage device.

There is therefore the need to provide a method and a system for improving the quality of the bulk material for use in the thermal energy storage device.

### Summary of the Invention

This need is addressed by the subject matter of the independent claims. Advantageous embodiments of the present invention are described by the dependent claims.

According to a first aspect of the invention, a method for improving at least one quality parameter of a bulk material for thermal energy storage in a thermal energy storage device is claimed. The method according to the present invention comprises at least the steps of delivering the bulk material at a processing location of the thermal energy storage device and of subsequently conducting at least a processing step for improving the at least one quality parameter, wherein the processing step is carried out at the processing location of the thermal energy storage device.

This aspect of the invention is based on the idea that the bulk material is controlled and treated at the processing location of the thermal energy storage device, so that modifications of the bulk material occurred during its transportation from its source to the location of the thermal energy storage device can be efficiently counteracted or the quality of the delivered bulk material can be improved.

According to the approach of the present invention it is therefore possible to improve at least one of the quality parameters of the bulk material directly at the location of the thermal energy storage device after the bulk material has been transported there from its source.

In the present application, "bulk material" is a material configured to store heat in form of thermal energy. Bulk material is formed by particles, which may comprise or consist of rocks, bricks, stone, lava stone, granite, basalt and/or ceramics. The bulk material may also be configured as a pebble bed, where the particles forming the bulk material form the pebbles of the pebble bed. According to another possibility, the bulk material may be formed by particles joined together to form a conglomerate. Preferably, the bulk material comprises or consists of sand and/or stones, in particular gravel, rubble and/or grit. The stones can be natural stones or artificial stones. Artificial stones are for example containers filled with non-natural material, such as ceramics. Bulk material may also be referred to as thermal energy storage material in the present invention.

In the present application, "quality parameter of a bulk material" may refer to any physical and/or chemical property of the bulk material itself. In particular, the following parameters might be taken under consideration:
Purity and/or material composition: apart from the bulk material used for storing thermal energy, the bulk material delivered may contain traces of other components, which can negatively influence an efficient working and/or the lifetime of the thermal energy storage device, due to for example an increased corrosion rate or a lower heat capacity. It is therefore important, that such components are removed from the bulk material. Also the material composition, particularly in terms of density of the bulk material, is of importance when considering the effective functioning of the thermal energy storage device.

Particle size and/or shape: the size and/or the shapes of the particles forming the bulk material is also of primary importance, as they influence the pressure drop across the bulk material when the thermal energy is added or removed from the bulk material. In particular, a wide size distribution of the particles forming the bulk material leads to a decreased number of gaps and/or to a decreased size of gaps between the particles of the bulk material, thus resulting in a higher pressure drop across the bulk material and consequently to a lower efficiency of the thermal energy storage device. It is therefore important to have as much uniformity, that is little distribution, of the shapes and of the sizes of the particles forming the bulk material to improve its quality.

Stored humidity: the bulk material may contain humidity, either naturally and/or due to storage conditions of the bulk material, prior and/or during to the transportation of the same from its source to the location of the thermal energy storage device, in a humid environment. During the operation of the thermal energy storage device and the corresponding high temperatures, the humidity can be released and interact negatively with components of the thermal energy storage device, such as metallic components, such as pipes and/or dampers. It is therefore important to reduce the quantity of the stored humidity of the bulk material as much as possible to improve the quality of the same.

Dust: dust may be present in the bulk material after transportation and filling of the bulk material in a chamber of the thermal energy storage device. Such dust may negatively interact with other system components of the thermal energy storage device and lower the efficiency of the system due to an increased pressure drop across the bulk material, when the thermal energy storage device is in operation. Furthermore, dust in the thermal energy storage device can cause abrasion of the system's components, thus reducing the lifetime of the thermal energy storage device. Another problem caused by dust is fouling of the thermal energy storage device, which has a negative impact on the thermal energy storage device during operation, thus resulting in a decreased performance of the thermal energy storage device. It is therefore important to remove as much dust as possible from the bulk material before operation of the thermal energy storage device to improve its efficiency.

Roughness of the particles of the bulk material: an increased roughness of the particles increases the pressure drop across the bulk material during operation of the thermal energy storage device, whereas a smooth surface of the particles reduces such pressure drop and therefore improves the efficiency of the thermal energy storage device during operation. This is due to the fact that the smoother the particles of the bulk material are, the less dust is generated during operation of the thermal energy storage device as a consequence of abrasion between particles. Also, smoother particles cause smaller forces on the storage chamber of the thermal energy storage device during thermal expansion caused by heating. It is therefore important to have particles of the bulk material as smooth as possible to improve the quality of the bulk material itself.

The list of the quality parameters may include other parameters, such as the toxicity or the chemical composition of the bulk material.

In the present application is a "processing step" any treatment that leads to an improvement of at least one of the quality parameters listed above.

The processing step according to the present invention is particularly directed to modify the physical and/or chemical properties of the particles forming the bulk material, that is to modify the physical and/or chemical properties of the bulk material itself.

The present invention includes both the case in which only one processing step is performed on the bulk material as well as more consecutive processing steps are performed on the bulk material.

According to an embodiment of the invention, wherein the processing step comprises sieving the bulk material. In such a way it is possible to filter the bulk material according to the size and/or the shapes of the particles forming the bulk material.

The sieving of the material is performed in order to reduce the distribution of the shapes and/or sizes of the particles forming the bulk material, in order to have a high uniformity in the shapes and/or the sizes to improve the quality of the bulk material.

It can therefore be advantageous to use during sieving a sieve having sieve openings with a predetermined shape. In such a way, only particles having a particular, predetermined shape can be filtered and used as particles forming the bulk material.

Different possible shapes of the particles are possible. Some examples of shapes that can be used for the sieve openings include, but are not limited to, round, oval, polygonal or even irregular shapes.

It can also be advantageous, that during sieving a sieve having sieve openings with predetermined dimensions is used. In such a way, the particles sieved have smaller dimensions than predetermined ones. The sieved particles can be then excluded from the bulk material as being too small.

It is also possible to exclude particles that are bigger than a certain dimension. In such a case, the sieved particles obtained after sieving are used as bulk material in the thermal energy storage device and the particles that are not sieved after sieving are excluded from the bulk material as being too big.

By sieving the particles as a function of their size it is possible to obtain a more uniform size distribution of the particles forming the bulk material and, therefore, to improve the quality of the bulk material.

It is also possible to sieve the particles forming the bulk material in multiple steps, first by removing the small particles and then by removing the bigger particles, in order to have a more uniform distribution of the particles' sizes. According to this aspect, the sieving processing step of the bulk material comprises a first sieving and a second sieving. During the first sieving a sieve having sieve openings with first predetermined dimensions is used and during the second sieving a sieve having sieve openings with second predetermined dimensions is used, wherein the second predetermined dimensions are bigger than the first predetermined dimensions.

Of course, it is also possible to combine a sieving processing based on the dimensions of the particles with a sieving processing step based on the shape of the particles. In such a case, it is particularly advantageous to first sieve the particles according to their size and then, in a successive processing step, to sieve the particles according to their shape. It is however possible to first sieve the particles according to their shape and then according to their size as well.

The present invention includes any combination of sieving performed in multiple steps in any order, in order to reduce the particles' size and shape distribution.

According to another embodiment of the present invention, the processing step comprises modifying the surface roughness of the bulk material.

As elucidated above, the surface roughness of the particles, that is the surface roughness of the bulk material, is a key parameter for providing a thermal energy storage device with improved efficiency. In particular, it is important to reduce the surface roughness of the particles forming the bulk material to smoothen out their surfaces in order to decrease the pressure drop across the bulk material. Also, the smoother the particles of the bulk material are, the less dust is generated during operation of the thermal energy storage device as a consequence of abrasion between particles. Also, smoother particles cause smaller forces on the storage chamber of the thermal energy storage device during thermal expansion caused by heating.

To reduce the surface roughness of the particles forming the bulk material, different methods known can be used. As an example, the modification of the surface roughness of the bulk material is carried out by tumbling, in particular by wet tumbling.

If (wet) tumbling is used for modifying the surface roughness of the particles forming the bulk material, the processing step of modifying the surface roughness of the bulk material comprises a number of sub-steps. At first, the particles forming the bulk material are filled in a tumbling chamber. The tumbling chamber is then filled with polishing particles and, in case wet tumbling is performed, also with water. The tumbling chamber is then set into motion. The particles of the bulk material bump into each other and come into contact with the polishing particles, so that the particles forming the bulk material are subjected to abrasion. As a result, the particles forming the bulk material are smoothed and their edges are polished into having a rounded shape.

Therefore, by performing (wet) tumbling on the particles forming the bulk material, not only their roughness can be modified by smoothing out their surface, but it is also possible to obtain particles having a particular form, for example a spherical one. Thus, it is possible through (wet) tumbling to also reduce the form distribution of the particles forming the bulk material.

Wet tumbling is preferred over dry tumbling, as wet tumbling is quieter, cheaper and provides particles forming the bulk material having a cleaner surface.

Other possibilities for modifying the surface roughness of the particles forming the bulk material are given by chemically treating the particles forming the bulk material and/or by coating them. In particular, it is possible to modify the surface roughness of the particles forming the bulk material by etching or lacquering.

It is also possible to coat the particles forming the bulk material for improving different physical and chemical properties, in particular thermodynamical properties allowing an improved flow around the particles forming the bulk material during the operation of the thermal energy storage device.

The coating layer of the particles forming the bulk material may also be a layer for improving the surface smoothness, so that the particles glide better against each other.

The particles forming the bulk material may be also coated with a layer having a high thermal conductivity for improving the heat transfer during the operation of the thermal energy storage device. Such a coating layer may also have a high thermal capacity, in order to reduce thermal shocks within the particles forming the bulk material during the operation of the thermal energy storage device.

It is also possible to coat the particles forming the bulk material with a humidity-retaining layer, which is configured to bond humidity, thus avoiding that such humidity reaches sensitive parts of the thermal energy storage device and/or system. This aspect is particularly useful when the bulk material in thermal energy storage device is cooled down and condensate might form inside the thermal energy storage device or inside the thermal energy storage system.

Also, a chemical coating of the particles forming the bulk material is particularly useful to prevent fouling of the particles as well as to protect them against contamination from other agents. Also, a chemical coating provides a better resistance against chemical agents, which can degrade the quality of the particles forming the bulk material.

According to yet another embodiment of the invention, the processing step comprises blowing air around the bulk material. In this way it is possible to blow away the dust in the bulk material.

Also hot air can be blown around the bulk material, thus allowing to dry the bulk material, that is to remove humidity from the bulk material, along with blowing away the dust present in the bulk material.

Another possibility for removing dust from the bulk material is to wash it. Accordingly, it is provided by a further embodiment of the invention that the processing step comprises washing the bulk material. By washing the bulk material it is also possible to remove other impurities that may not be removed by blowing air around the bulk material. For example, the solution used to wash the bulk material may contain certain agents for removing biological material and/or other foreign particles adhered on the particles forming the bulk material.

If the bulk material is washed, it is convenient to dry it to remove the humidity before using the bulk material in the thermal energy storage device.

Therefore, according to a further embodiment of the invention, the processing step comprises drying the bulk material.

By drying the bulk material it is possible to remove the humidity from the bulk material itself and thus improve the life span of the components of the thermal energy storage device, such as metal pipes, which might be negatively affected from interaction with released humidity due to, for example, corrosion.

There are different possible ways in which the bulk material can be dried out.

According to an embodiment of the invention, the processing step of drying the bulk material is carried out inside an oven.

According to yet another embodiment of the invention, the step of drying the bulk material is carried out in the thermal energy storage device by using heat of the thermal energy storage device itself. In this case, the bulk material is filled inside a chamber of the thermal energy storage device and the processing step of drying the bulk material is performed by using heat provided to the thermal energy storage device by a component connected to it. Such a component can be a heater included in a thermal energy storage system, in which the thermal energy storage device is included, whereby the heater is used to transfer heat to the bulk material stored in the thermal energy storage device.

Other possibilities for drying the bulk material are air drying and/or drying of the bulk material due to exposition to solar radiation.

According to another embodiment of the invention, the processing step comprises removing impurities from the bulk material by means of sedimentation and/or separation. Other techniques may also be used for removing impurities from the bulk material. For example, metal scrap or metallic material within the bulk material may be removed by means of magnetic separation.

Other possibilities for removing impurities from the bulk material include sieving, shaking, blowing, sucking and/or manual separation.

According to an embodiment of the application, robot separation can also be implemented. In this case, the separation step can be performed by a robot that identifies the impurities present in the particles forming the bulk material. A way for identifying the impurities in the bulk material is to use an optical sensor.

Also a sorting machine can be used to identify and remove impurities from the bulk material.

According to this aspect, it is therefore possible to remove impurities from the bulk material, thus guaranteeing a certain material composition of the same.

According to yet another embodiment of the present invention, the processing step is carried out before filling the bulk material in a chamber of the thermal energy storage device. In such a way it is therefore possible to treat the bulk material before filling a chamber of the thermal energy storage device, in which the bulk material stores thermal energy.

It is however also possible, to first fill the bulk material in the chamber of the thermal energy storage device and then treat the bulk material to improve at least one of its quality parameters.

Furthermore, it is also possible to perform at least one processing step for improving at least a quality parameter of the bulk material before filling it in a chamber of the thermal energy storage device and then, after the bulk material is filled in the chamber of the thermal energy storage device, to perform at least one further processing step for improving at least a quality parameter of the bulk material is performed.

It is for example possible to first perform a first processing step comprising sieving before filling the bulk material in a chamber of the thermal energy storage device and then, after filling the sieved bulk material in the chamber of the thermal energy storage device, to perform a processing step comprising drying of the bulk material by using heat provided by a component connected to the thermal energy storage device itself.

The present invention is also directed to a thermal energy storage system comprising thermal energy storage device, a processing location at the location of the thermal energy storage device, at which processing location of the thermal energy storage device the bulk material is deliverable, and a quality improvement unit for improving at least a quality parameter of the bulk material, wherein said quality improvement unit is arranged at the processing location of the thermal energy storage device.

The quality improvement unit can comprise any of the instruments needed for performing the processing steps according to the method claims.

For example, the quality improvement unit can comprise one or more sieves, a chamber for performing (wet) tumbling of the bulk material, a chamber for drying the material and/or a chamber in which sedimentation and/or separation can be performed for removing the impurities from the bulk material. The quality improvement unit may also comprise more chambers for performing more processing steps on the bulk material. It is therefore possible that the one and/or more chambers of the quality improvement unit are configured for air blowing, washing, sieving, shaking, manual separation of, robot separation of, sucking, blowing and/or (machine) sorting the bulk material and its particles.

The quality improvement unit can also include an optical and/or magnetic sensor for detecting impurities in the bulk material.

A further object of the present invention is represented by a computer implemented method for carrying out the method of any of the method claims. The computer implemented method comprises a first step of registering at least a first value of a quality parameter of the delivered bulk material measured by a sensor, in particular an optical sensor, and save the first value. After the first value is registered, the computer implemented method carries out the step of conducting the at least one processing step to improve the at least one quality parameter of the bulk material and, subsequently to this step, registering at least a second value of the quality parameter of the bulk material measured by the sensor and save the second value. The computer implemented method then carries out the step of comparing the second value and the first value with each other. From the comparison of the second value with the first value, the computer implemented method can determine if the quality parameter of the bulk material was improved during the processing step.

The sensor used for measuring a first and a second value of the quality parameter is preferably an optical sensor, such as a camera, through which, for example, the size distribution of the particles can be measured.

After the comparison of the first and the second value it is then possible to determine whether the quality parameter of the bulk material, such as the size distribution, has been improved through the processing step or not.

If this is not the case, then a further processing step can be performed on the bulk material for improving the quality parameter.

As used herein, reference to a computer implemented method is intended to be equivalent to a reference to a computer program and/or to a program element and/or to a computer readable medium containing instructions for controlling a computer system to coordinate the performance of the above described method.

The computer implemented method may be implemented as computer readable instruction code in any suitable programming language, such as, for example, JAVA, C++, and may be stored on a computer-readable medium (removable disk, volatile or nonvolatile memory, embedded memory/processor, etc.). The instruction code is operable to program a computer or any other programmable device to carry out the intended functions. The computer program may be available from a network, such as the World Wide Web, from which it may be downloaded.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows schematically a method for improving at least one quality parameter of a bulk material for thermal energy storage in a thermal energy storage device according to an exemplary embodiment;
Figures 2A and 2B show the bulk material in a first state before the implementation of the method (Figure 2A) and in a second state after the implementation of the method (Figure 2B);
Figure 3 shows a schematically representation of a possible embodiment of a thermal energy storage system according to the invention.
Figure 4 shows another schematically representation of a possible embodiment of a thermal energy storage system according to the invention.

### Detailed Description

The illustrations in the drawing is schematically. It is noted that in different figures, similar or identical elements are provided with the same reference signs or with reference signs, which are different from the corresponding reference signs only within the first digit.

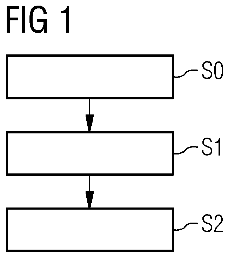

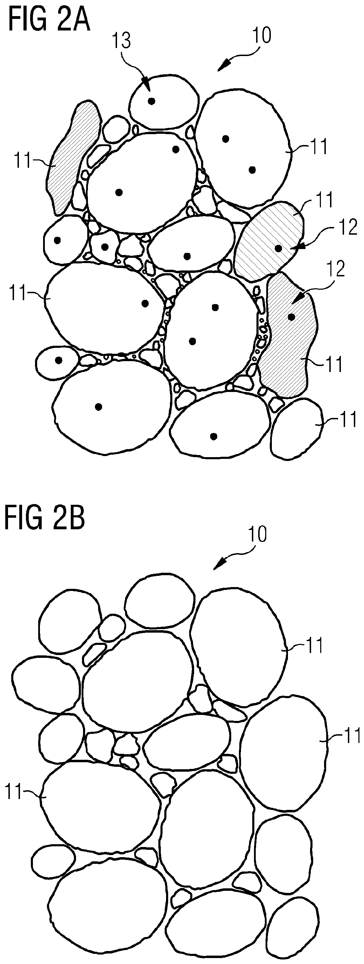

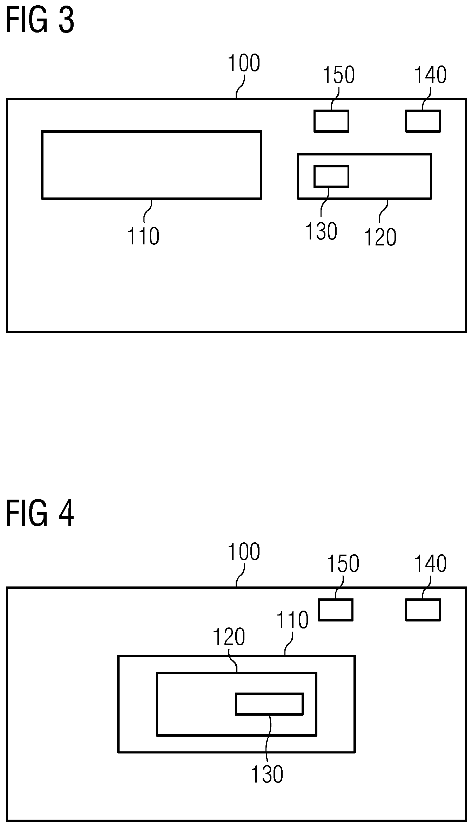

**Figure 1** shows schematically a method for improving at least one quality parameter of a bulk material 10, as shown in **Figures 2A** and **2B,** for thermal energy storage in a thermal energy storage device 110 of a thermal energy storage device system 100 according to an exemplary embodiment of the invention and shown in **Figures 3** and **4****.**

As it can be seen in **Figure 1** the exemplary method comprises three steps.

In a first step S0, the bulk material 10 is delivered from the source of the bulk material 10 to a processing location 120 of the thermal energy storage device 110. The bulk material 10 delivered at such location 120 is transported from its source.

Although the quality of the bulk material 10 can be controlled at the source, the bulk material 10 might experience a worsening in one or more of its quality parameters during transportation. For example, the particles 11 forming the bulk material 10 might crash with each other during transportation from the source to the location 120 of the thermal energy storage device 110, so that dust is generated inside the bulk material 10. Another problem might be represented by a change in the environmental conditions during transportation leading to an increased humidity 13 content of the bulk material 10. Also contaminants or other impurities 12 might affect the bulk material 10 during its transportation from the source to the location 120 of the thermal energy storage device 110. Also, the bulk material 10 might already have a deteriorated quality at the source before transportation.

All of the above listed conditions, lead to a deterioration of at least one quality parameter of the bulk material 10. Of course, the above listed conditions are a mere exemplary and non-exhaustive representation of the conditions, which might be leading to a deterioration of at least a quality parameter of the bulk material 10. Other deteriorating conditions may also arise.

To improve the at least one deteriorated quality parameter of the bulk material 10, at least a processing step S1 is performed on the bulk material 10 itself at the processing location 120 of the thermal energy storage device 110.

The processing step S1 comprises at least one step, although according to the present invention the processing step S1 can also comprise more than one processing steps onto the bulk material 10.

The processing step S1 is carried out in a quality improvement unit 130, which can be located either within or outside the thermal energy storage device 110.

The processing step S1 may comprise, but is not limited to, sieving the particles 11 forming the bulk material 10, modifying the surface roughness of the particles 11 forming the bulk material 10, modifying the shape of the particles 11 forming the bulk material 10, cleaning the bulk material 10, removing impurities 12 from it or reducing the humidity 13 from the bulk material 10.

Step S1 can therefore be summarized as a processing step aimed at modifying at least one chemical and/or physical property of the bulk material 10 leading to a quality improvement of at least one quality parameter of the bulk material 10.

For example, the particles 11 forming the bulk material 10 can be sieved by using a sieve having openings with a predetermined shape or predetermined dimensions. It might also be the case, that the bulk material 10 is first sieved to exclude particles 11 smaller than a certain size and subsequently sieved to exclude particles 11 bigger than a certain size. In this case, it is possible to effectively reduce the size distribution of the particles 11 forming the bulk material 10. It might also be possible to sieve the particles 11 forming the bulk material 10 firstly according to their dimensions and then according to their shape.

The present invention also comprises the case in which the bulk material 10 is sieved several times by alternating a sieving aimed at excluding the particles 11 of the bulk material 10 that are smaller or bigger than a certain size and a sieving aimed at excluding the particles 11 not having a certain shape.

The processing step S1 can also comprise the modification of the surface roughness of the particles 11 forming the bulk material 10 in order to smooth them out.

To this regard, wet tumbling is a particularly advantageous way to modify the surface roughness of the particles 11 forming the bulk material 10. During wet tumbling, the particles 11 forming the bulk material 10 are filled in a tumbling chamber. The tumbling chamber is then filled with polishing particles and, if wet tumbling is performed, with water. The tumbling chamber is then set into motion. The particles 11 of the bulk material 10 bump into each other and come into contact with the polishing particles, so that the particles 11 forming the bulk material 10 are subjected to abrasion. As a result, the particles 11 forming the bulk material 10 are smoothed and their edges are polished into having a rounded shape.

Wet tumbling does not only provide smoother particles 11 forming the bulk material 10, but it also allows to modify the shape of the particles 11 forming the bulk material 10 by smoothing off the particles' edges.

Of course, wet tumbling is not the only possible way to modify the surface roughness of the particles 11 forming the bulk material 10 and other methods known to the skilled person are also comprised by the present invention and its disclosure.

The processing step S1 can also consist in a cleaning step of the bulk material 10. The cleaning step of the bulk material 10 is preferably carried out by either blowing air around the bulk material 10 or by washing it. If the bulk material 10 is cleaned by washing, it is also possible to add additives to a washing solution used for washing the bulk material 10 in order to remove contaminants, such as biological material, in a more effective way from the bulk material 10.

The bulk material 10 can also be purified from impurities 12 or dust by using other means, such as sedimentation and/or separation.

The processing step S1 can also consist of removing the humidity 13 contained in the bulk material 10. In this case, the bulk material 10 can either be dried by using a hot air stream or inside an oven.

It is also possible to first fill the bulk material 10 inside a chamber of the thermal energy storage device 110 and then to dry the bulk material 10 in the chamber by using heat provided to the thermal energy storage device 110 by a component of the thermal energy storage system 100. Such a component can be, for example, a heater configured to heat the bulk material 10 in the thermal energy storage device 110 during operation of the thermal energy storage device 110.

Summarizing, the processing step S1 can contain one, more or all of the above described steps, which can be performed in any order.

It is also possible, that the processing step S1 is carried out before or after filling the bulk material 10 in a chamber of the thermal energy storage device 110, in which case the chamber of the thermal energy processing device acts as the quality improvement unit 130. If the processing step S1 comprises more actions to be carried out on the bulk material 10, it is then possible to carry out some of the actions before and some of the action after filling the bulk material 10 in a chamber of the thermal energy storage device. Of course, all actions comprised in the processing step S1 may be performed before or after filling a chamber of the thermal energy storage device 110.

After the processing step S1, the bulk material 10 is delivered for use in the thermal energy storage system 100 in step S2.

**Figure 2A** and **2B** show the bulk material 10 in a first state before the implementation of the method **(****Figure 2A****)** and in a second state after the implementation of the method **(Figure 2B)** .

In **Figure 2A** a bulk material 10 contains a number of particles 11. The particles 11 are irregular in shape, contain humidity 13 and contamination and/or impurities 12. The bulk material 10 of **Figure 2A** is delivered at a processing location of a thermal energy storage device, where it undergoes a processing step S1 as described in **Figure 1****.** For example, the bulk material 10 in **Figure 2A** can be sieved, washed and dried to obtain a more uniform bulk material 10, as shown in **Figure 2B.** This more uniform bulk material 10 is then used in the thermal energy storage device for storing up thermal energy and guaranteeing a more efficient functioning of the thermal energy storage device.

**Figure 3** shows a schematically representation of a possible embodiment of a thermal energy storage system according to the invention.

In **Figure 3** a thermal energy storage system 100 comprises a thermal energy storage device 110, a processing location 120 at the location of the thermal energy storage device 110 and a quality improvement unit 130 at the processing location 120, whereby the quality improvement unit 130 in **Figure 3** is located outside of the thermal energy storage device. At the processing location 120 bulk material 10 is deliverable. The bulk material 10 is then processed in the quality improvement unit 130 for improving at least one quality parameter of the bulk material 10. The quality improvement unit 130 is configured to carry out one or more of the processing steps S1 described in **Figure 1** in any order.

In **Figure 3** a computing unit 140 is provided within the thermal energy storage system 100. The computing unit 140 is configured for carrying out a computer implemented method for improving the quality of the bulk material 10. The computing unit 140 is preferably a computer or a portable device, which is able to control a sensor 150 and the quality parameter improvement unit 130. The sensor 150 may be or may not be integrated in the computing unit 140.

The computer implemented method carried out by the computing unit 140 comprises a first step of registering at least a first value of a quality parameter of the delivered bulk material 10 measured by the sensor 150. The sensor 150 is preferably an optical sensor, such as a camera, which can be either normal or infrared, or a microscope. The sensor 150 can however also be any other type of sensor configure for measuring at least one quality parameter concerning a physical and/or chemical property of the bulk material 10, such as chemical composition, density, presence of impurities, size and/or shape distribution.

After the first value is registered, the computing unit 140 carries out the step of conducting the at least one processing step S1 to improve the at least one quality parameter of the bulk material 10. The processing step S1 may consist in any of the processing steps mentioned in this patent application aimed at improving the quality parameter, whose value has been measured by the sensor 150.

The computing unit 140 is preferably configured for automatically controlling the quality parameter improvement unit 130, so that a fully automated process can be implemented. This is however not essential for carrying out the disclosed invention.

Subsequently, the sensor 150 registers a second value of the quality parameter.

The computing unit 140 then compares the first and the second value and determines if the quality parameter has been improved in such a way, that the bulk material can now be used in the thermal energy storage device 110 or not. If this is not the case, the computing unit 140 may be configured to either warn a user of the thermal energy storage device via a non-shown warning signal or to perform another processing step S1 on the bulk material 10 to further improve the quality parameter being considered.

It is also possible, that the computing unit 140 is configured to perform the computer implemented method a first time to improve a first quality parameter of the bulk material 10 and, after such first quality parameter has been improved to an acceptable level, to perform the computer implemented method a second time to improve a second quality parameter of the bulk material 10.

**Figure 4** shows a thermal energy storage system 100 in which the quality improvement unit 130, contrary to the embodiment of **Figure 3****,** is located within the thermal energy storage device 110. This might be for example the case, in which the bulk material 10 is dried inside a chamber of the thermal energy storage device 110 by using heat provided to the thermal energy storage device 110 by a component of the thermal energy storage system 100, such as a heater.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. Method for improving at least one quality parameter of a bulk material (10) for thermal energy storage in a thermal energy storage device (110), wherein the method comprises
delivering (S0) the bulk material (10) at a processing location (120) of the thermal energy storage device (110), and subsequently
conducting at least a processing step (S1) for improving the quality parameter,
wherein the processing step (S2) is carried out at the processing location (120) of the thermal energy storage device (110) .

2. Method according to claim 1,
wherein the processing step (S1) comprises sieving the bulk material (10).

3. Method according to claim 2,
wherein during sieving a sieve having sieve openings with a predetermined shape and/or a sieve having sieve openings with predetermined dimensions is used.

4. Method according to claim 3,
wherein the sieving processing step of the bulk material (10) comprises
a first sieving and a second sieving,
wherein during the first sieving a sieve having sieve openings with first predetermined dimensions is used and during the second sieving a sieve having sieve openings with second predetermined dimensions is used,
wherein the second predetermined dimensions are bigger than the first predetermined dimensions.

5. Method according to one of the preceding claims,
wherein the processing step (S1) comprises modifying the surface roughness of the bulk material (10).

6. Method according to claim 5,
wherein modifying the surface roughness is carried out by centrifugation, particularly by wet tumbling, chemical treating and/or coating, of the particles (11) forming the bulk material (10).

7. Method according to one of the preceding claims,
wherein the processing step (S1) comprises removing dust from the bulk material (10), in particular by blowing air around and/or by washing the bulk material (10).

8. Method according to one of the preceding claims,
wherein the processing step comprises washing the bulk material (10).

9. Method according to one of the preceding claims,
wherein the processing step (S1) comprises drying the bulk material (10), in particular by air drying and/or exposure to solar radiation.

10. Method according to claim 9,
wherein the processing step of drying the bulk material (10) is carried out inside an oven.

11. Method according to claim 9 or 10, further comprising
filling the bulk material (10) in a chamber of the thermal energy storage device (110),
wherein the processing step of drying the bulk material (10) is performed by using heat provided to the thermal energy storage device (110) by a component connected to it.

12. Method according to one of the preceding claims,
wherein the processing (S1) step comprises removing impurities (12) from the bulk material (10), in particular by means of sedimentation, separation, magnetic separation, sieving, shaking, blowing, sucking, manual separation, robot separation and/or a sorting device.

13. Method according to one of the preceding claims,
wherein the processing step (S1) is carried out before filling the bulk material in a chamber of the thermal energy storage device (110).

14. Thermal energy storage system (100) comprising
a thermal energy storage device (110),
a processing location (120) at the location of the thermal energy storage device (110), at which processing location (120) of the thermal energy storage device (110) the bulk material (10) is deliverable, and
a quality improvement unit (130) for improving a quality parameter of the bulk material (10),
wherein said quality improvement unit (130) is arranged at the processing location (120) of the thermal energy storage device (110).

15. A computer implemented method for carrying out the method of any of the claims 1 to 13, wherein the method comprises the following steps:
registering at least a first value of a quality parameter of the delivered bulk material (10) measured by a sensor, in particular an optical sensor, and save the first value;
conducting the at least one processing step (S1) to improve the at least one quality parameter of the bulk material (10) ;
subsequently, registering at least a second value of the quality parameter of the bulk material (10) measured by the sensor and save the second value;
comparing the second value and the first value with each other; and
determine from the comparison if the quality parameter of the bulk material (10) was improved during the processing step (S1).
